# EUROPEAN PATENT APPLICATION

(11) **EP 4 818 913 A1**
(43) Date of publication of application: **07.10.2026**
(21) Application number: 25817727.8
(22) Date of filing: 20.06.2025
(51) Int. Cl.: G06F 13/16

(54) **IN-MEMORY PROCESSING CHIP**

(30) Priority: 09.10.2024 CN 202411396760
(71) Applicant: CXMT Corporation, Hefei City, Anhui Province 230601 (CN)
(72) Inventor: CAO, Kanyu, Hefei, Anhui 230601 (CN); TU, Huayao, Hefei, Anhui 230601 (CN); TANG, Yanzhe, Hefei, Anhui 230601 (CN); ZHANG, Lin, Hefei, Anhui 230601 (CN); LI, Hongwen, Hefei, Anhui 230601 (CN); GAO, Enpeng, Hefei, Anhui 230601 (CN)
(74) Representative: Gulde & Partner
(86) International application number: PCT/CN2025/102310
(87) International publication number: WO 2026/076997

(57) **Abstract**

The present disclosure provides an in-memory processing chip, which may include at least an interface circuit, a memory circuit, and a computing unit. A first transmission path exists between the interface circuit and the memory circuit; a second transmission path exists between the memory circuit and the computing unit; and a third transmission path exists between the interface circuit and the computing unit, and the third transmission path and the first transmission path are independent of each other.

## Description

### CROSS-REFERENCE TO RELATED APPLICATIONS

This application is based on and claims priority of the Chinese Patent Application No. 202411396760.9, filed with the China National Intellectual Property Administration on October 9, 2024 and entitled "IN-MEMORY PROCESSING CHIP".

### TECHNICAL FIELD

Embodiments of this application relate to the field of semiconductors, and in particular to an in-memory processing chip.

### BACKGROUND

With continuous development of artificial intelligence and big data, a demand for computing power in various application scenarios continuously increases. However, a mainstream computing architecture adopts a Von Neumann architecture that separates storage and computing, and a bandwidth increase speed of a memory has lagged far behind a computing power increase speed of a processor. Therefore, a memory wall problem in which actual computing power of a computing system is limited due to insufficient bandwidth exists. An existing in-memory processing chip is implemented by replacing some memory units in a memory chip with computing units, which may not change an encapsulation manner of an entire chip, but a problem of capacity loss and low computing power exists.

### SUMMARY

Embodiments of this application provide a new architecture of an in-memory processing chip.

According to some embodiments of this application, the embodiments of this application provide an in-memory processing chip, including an interface circuit, a memory circuit, and a computing unit. A first transmission path exists between the interface circuit and the memory circuit; a second transmission path exists between the memory circuit and the computing unit; and a third transmission path exists between the interface circuit and the computing unit, and the third transmission path and the first transmission path are independent of each other.

In some embodiments, the in-memory processing chip includes multiple memory circuits and multiple computing units, each of the computing units corresponds to at least one memory circuit, different memory circuits each have a corresponding first transmission path and a corresponding second transmission path, and different memory circuits are each connected to the interface circuit through the corresponding first transmission path.

In some embodiments, the first transmission path is at least configured to transmit model data, the second transmission path is at least configured to transmit model data, the third transmission path is at least configured to transmit initial data and target data, and the computing unit performs computing processing on the initial data based on the model data to obtain the target data.

In some embodiments, the first transmission path is further configured to transmit the initial data and the target data, and the second transmission path is further configured to transmit the initial data and the target data.

In some embodiments, bandwidths of the first transmission path and the second transmission path are each greater than a bandwidth of the third transmission path, and a priority of the third transmission path in transmitting the initial data and the target data is higher than priorities of the first transmission path and the second transmission path.

In some embodiments, the in-memory processing chip further includes a gating circuit, and the memory circuit is connected to the first transmission path or the second transmission path through the gating circuit.

In some embodiments, the gating circuit is further configured to record refresh information of a corresponding memory circuit, and is configured to send the recorded refresh information to the interface circuit before the interface circuit is disconnected from the memory circuit or after the interface circuit is reconnected to the memory circuit.

In some embodiments, the in-memory processing chip further includes a memory controller disposed between a corresponding memory circuit and a corresponding gating circuit, or disposed between a corresponding gating circuit and the computing unit, and the memory controller is at least configured to read data in the memory circuit.

In some embodiments, the in-memory processing chip further includes a mode control circuit configured to control the memory circuit to be connected to the first transmission path, or control the memory circuit to be connected to the second transmission path.

In some embodiments, the mode control circuit is further configured to connect or disconnect the third transmission path.

In some embodiments, the mode control circuit is in a region in which the interface circuit is located.

In some embodiments, a total bandwidth between the memory circuit and the computing unit in the in-memory processing chip is greater than a bandwidth between the in-memory processing chip and an external processor.

### BRIEF DESCRIPTION OF DRAWINGS

One or more embodiments are exemplified with the figures in the accompanying drawings corresponding to the one or more embodiments. These example descriptions are not intended to limit the embodiments, and unless specifically stated, no scale limitations are constituted by the figures in the accompanying drawings.
FIG. 1 to FIG. 7 are schematic diagrams of a structure of an in-memory processing chip according to embodiments of this application; and
FIG. 8 is a schematic diagram of a structure of a computing system according to an embodiment of this application.

### DESCRIPTION OF EMBODIMENTS

Embodiments of this application are described in detail below with reference to the accompanying drawings. However, it may be understood by a person of ordinary skill in the art that in the embodiments of this application, many technical details are provided to enable readers to better understand this application. However, the technical solutions claimed in this application may be implemented even without these technical details and various changes and modifications made based on the following embodiments.

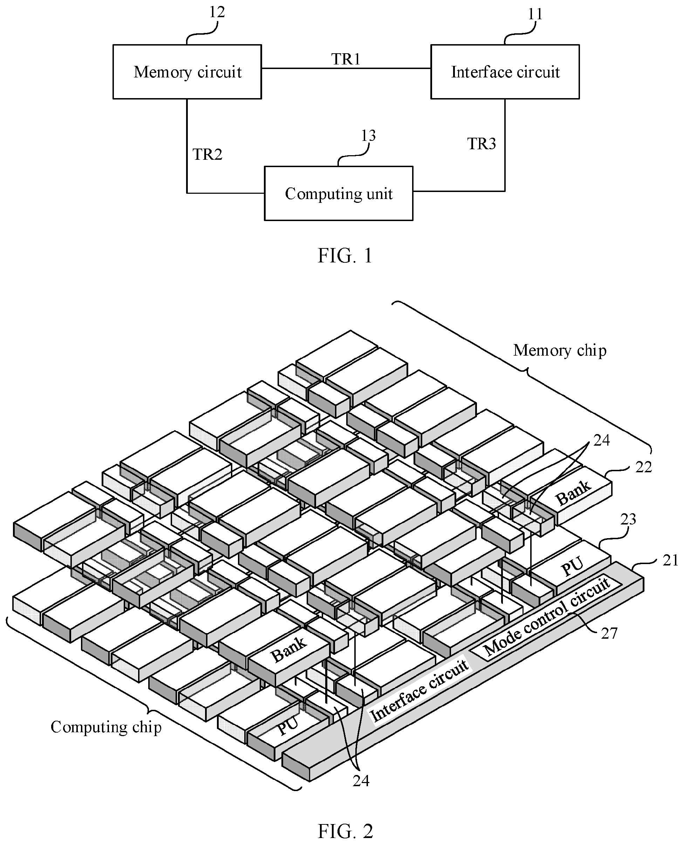

FIG. 1 to FIG. 7 are schematic diagrams of a structure of an in-memory processing chip according to embodiments of this application.

Referring to FIG. 1, the in-memory processing chip includes an interface circuit 11, a memory circuit 12, and a computing unit 13. A first transmission path TR1 exists between the interface circuit 11 and the memory circuit 12, a second transmission path TR2 exists between the memory circuit 12 and the computing unit 13, a third transmission path TR3 exists between the interface circuit 11 and the computing unit 13, and the third transmission path TR3 and the first transmission path TR1 are independent of each other.

In the present disclosure, the computing unit 13 is separately connected to the interface circuit 11 and the memory circuit 12, and the first transmission path TR1, the second transmission path TR2, and the third transmission path TR3 may all be configured for data transmission. That the third transmission path TR3 and the first transmission path TR1 are independent of each other means that there is no inevitable association between an available state of the first transmission path TR1 and an available state of the third transmission path TR3. Both may be in an available state or an unavailable state simultaneously, or one may be in an available state while the other may be in an unavailable state, which depends on a corresponding control signal. An available state of each transmission path is related to at least two factors: 1. A connection or disconnection within the transmission path, for example, a connection or disconnection of an internal driver. If the transmission path is disconnected, the transmission path is unavailable. 2. Whether the transmission path is in data communication with a data input circuit or a data output circuit. If a data path between the transmission path and the data input circuit or the data output circuit is disconnected, the transmission path is unavailable. The data input circuit is directly connected to an input terminal of the transmission path, and the data output circuit is directly connected to an output terminal of the transmission path.

In this way, after completing computing processing, the computing unit 13 does not need to transmit data through the second transmission path TR2 and forward data through the memory circuit 12, but can directly output the processed target data through the interface circuit 11 and the independent third transmission path TR3. In this way, it is beneficial to directly improve data transmission efficiency and indirectly improve data processing efficiency of the in-memory processing chip. In addition, because two mutually independent transmission paths are provided, the computing unit 13 can receive data through one of the transmission paths and output data through the other transmission path at the same moment. In this way, it is beneficial to simplify timing and further improve data transmission efficiency.

It may be understood that data transmission and signal transmission are different concepts. In this application, signal transmission refers to transmission of a control signal, data transmission refers to transmission of model data and normal data, and a purpose of signal transmission is to assist data transmission.

The embodiments of this application are described in more detail below with reference to the accompanying drawings.

In the present disclosure, the interface circuit 11 can not only receive and output data, but also undertake part of a signal processing function. The signal processing function of the interface circuit 11 can be adjusted according to an actual architecture of other circuits in the in-memory processing chip. The memory circuit 12 may be regarded as a memory chip, and includes a volatile memory chip, a non-volatile memory chip, and the like. The memory circuit 12 includes a memory unit configured to store data and a peripheral circuit configured to control data storage.

The computing unit 13 is configured to perform computing processing on input data based on a target rule, and output the processed target data. The computing processing may refer to performing an operation on the target data to extract other types of required information from the target data, such as colors of different positions at different moments of a video, or may refer to simplifying the target data to reduce a bandwidth required for transmission. The simplified data may further need to be restored to some extent or completely subsequently, so as to facilitate extraction of other types of information. This application does not impose any restriction on a function of the computing unit, and the function of the computing unit may be adaptively adjusted according to an actual application scenario. In addition, this application does not impose any restriction on the type of the computing unit either. The computing unit 13 may be implemented by a conventional arithmetic logic unit or a new type of CIM (Compute in Memory) in-memory computing unit, such as an SRAM in-memory computing unit.

In some embodiments, referring to FIG. 2, an in-memory processing chip includes multiple memory circuits 22 (Banks) and multiple computing units 23 (PUs), each of the computing units 23 corresponds to at least one memory circuit 22, different memory circuits 22 each have a corresponding first transmission path TR1 and a corresponding second transmission path TR2, and different memory circuits 22 are each connected to the interface circuit 21 through the corresponding first transmission path TR1.

In the example shown in FIG. 2, each of the computing units 23 corresponds to one memory circuit 22, each of the memory circuits 22 has a corresponding first transmission path and a corresponding second transmission path, and transmission paths corresponding to different memory circuits 22 are independent of each other. First terminals of different first transmission paths are configured to be connected to different memory circuits 22, and second terminals of different first transmission paths are all configured to be connected to the interface circuit 21, so as to receive or output data. First terminals of different second transmission paths are configured to be connected to different memory circuits 22, and second terminals of different second transmission paths are configured to be connected to different computing units 23. When each of the computing units 23 corresponds to at least two memory circuits 22, second terminals of different second transmission paths may be configured to be connected to the same computing unit 23. It may be understood that, in some scenarios, a part of the computing units 23 may correspond to one memory circuit 22 and another part of the computing units 23 may correspond to at least two memory circuits. In this way, it is beneficial to improve computing power allocation within the in-memory processing chip and avoid waste of computing power.

The memory circuit 22 and the computing unit 23 each have a corresponding connection module 24. The memory circuit 22 and the computing unit 23 are connected through corresponding connection modules 24. A connection manner includes at least one of TSV (Through Silicon Vias) or hybrid bonding (Hybrid bonding), so as to perform data transmission and signal control.

Furthermore, the in-memory processing chip may include multiple chips stacked in a vertical direction, a communication protocol between the chips is a private protocol, and the multiple chips are encapsulated together to form an in-memory computing chip. In some embodiments, referring to FIG. 2, the in-memory processing chip includes a computing chip and a memory chip that are stacked in the vertical direction, the computing unit 23 and the interface circuit 21 are both disposed in the computing chip, and the memory circuit 22 is disposed in the memory chip. It may be understood that the in-memory processing chip may alternatively include at least one memory chip and at least one computing chip that are stacked in the vertical direction, such as two memory chips or two computing chips. Theoretically, there may be N memory chips and M computing chips, and M and N are natural numbers greater than 1.

In another embodiment, the in-memory processing chip includes an interface chip, a computing chip, and a memory chip that are stacked in the vertical direction. The interface circuit 21 is disposed in the interface chip, that is, the interface circuit 21 and the computing unit 23 are disposed in different chips. In a case that the three chips are stacked, any chip may be disposed in an intermediate position. In some scenarios, a chip with a relatively large amount of input and output data may be disposed in the intermediate position, such as a memory chip with a relatively large amount of pre-stored model data, and/or a chip with relatively high heat generation due to data transmission or data calculation is disposed in a non-intermediate position, that is, disposed on an outside, such as a computing chip that needs to perform calculations or an interface chip that needs to frequently perform input and output.

Referring to FIG. 1 again, in some embodiments, the first transmission path TR1 is at least configured to transmit model data, the second transmission path TR2 is at least configured to transmit model data, the third transmission path TR3 is at least configured to transmit initial data and target data, and the computing unit 13 performs computing processing on the initial data based on the model data to obtain the target data.

The model data may also be understood as model weight data, and is adopted to represent a target rule of computing processing. After receiving the model data, the interface circuit 11 may first store the model data in the memory circuit 12. The computing unit 13 may read the model data from the memory circuit 12 through the second transmission path TR2, and receive the initial data through the interface circuit 11 and the third transmission path TR3, and then perform computing processing on the initial data based on the model data to obtain the processed target data. The target data can be output through the third transmission path TR3 and the interface circuit 11.

It may be understood that the "initial data" refers to unprocessed data, and the "target data" refers to processed data. Regardless of the initial data or the target data, a difference lies only in whether computing processing is performed, but either is normal data relative to the model data. For simplicity of expression, a part of subsequent descriptions will adopt "normal data" to refer to both the initial data and the target data.

In some embodiments, the interface circuit 11 may first receive the model data and then receive the initial data. In this way, by pre-storing the model data in the memory circuit 12 to stagger timing, the interface circuit 11 can adopt the same input/output port (hereinafter referred to as an IO port) to sequentially receive the model data and the initial data, thereby simplifying the IO port. In some other embodiments, ports in the interface circuit 11 for receiving the model data and the initial data are different. It should be noted that even if the interface circuit 11 adopts the same IO port to receive and output the model data and the normal data, the interface circuit may perform data transmission based on different transmission parameters. The transmission parameters include a burst length (burst length) and a quantity of ports adopted at the same moment. For example, the interface circuit 11 may adopt 16 ports to transmit the model data, and adopt 8 ports in the 16 ports to transmit the normal data; and a burst length is 16 when the model data is transmitted, and a burst length is 8 when the normal data is transmitted.

In some scenarios, a volume of model data is generally much greater than a volume of initial data. The former is generally at a GB level, and the latter is generally at an MB level. Therefore, the memory circuit 12 may be adopted to pre-store the model data to speed up loading without storing the initial data.

In some embodiments, the first transmission path TR1 is further configured to transmit the initial data and the target data, and the second transmission path TR2 is configured to transmit the initial data and the target data. In this way, the initial data may alternatively be input into the computing unit 13 through the first transmission path TR1 and the second transmission path TR2, and the target data may be output through the third transmission path, or may be output through the second transmission path and the first transmission path. In this way, it is beneficial to ensure that when the third transmission path is damaged or congested (buffer space is insufficient), the initial data is input and the target data is output through the first transmission path and the second transmission path.

In some embodiments, bandwidths of the first transmission path and the second transmission path are each greater than a bandwidth of the third transmission path, and a priority of the third transmission path in transmitting the initial data and the target data is higher than priorities of the first transmission path and the second transmission path.

It should be noted that a data amount of the target data has no absolute size relationship with a data amount of the initial data, but depends on a computing rule of the computing unit. In some embodiments, if the data amount of the target data is greater than the data amount of the initial data or if the data amount of the target data is greater than a target threshold, at least part of the target data can be transmitted through the first transmission path and the second transmission path, thereby improving efficiency of transmitting the target data. Part of the target data exceeding the target threshold may be transmitted through the first transmission path and the second transmission path, or all the target data may be transmitted through the first transmission path and the second transmission path.

After the initial data is input through the first transmission path and before the initial data is transmitted to the second transmission path TR2, the initial data may be stored in a memory unit in the memory circuit 12, or may be temporarily stored in a buffer circuit such as a buffer or a latch in the memory circuit 12. After the initial data is transmitted to the second transmission path TR2, the initial data stored in the memory unit may be retained or cleared (data clearing of the memory unit means that a potential of the memory unit is adjusted to a pre-charging state, which does not represent any data, or the memory unit is adjusted to a state in which data may be newly overwritten), and the initial data temporarily stored in the buffer circuit is generally cleared (clearing of the buffer circuit means that a data line in the buffer circuit is adjusted to a default potential state).

When the target data is output through the second transmission path, the target data may be temporarily stored in the buffer circuit of the memory circuit 12, or may be stored in the memory unit of the memory circuit. The target data transmitted to the memory circuit 12 may be stored in the memory circuit 12 and not temporarily output, or may be directly output through the first transmission path TR1 and the interface circuit 11. If the target data is stored in the memory circuit 12 and is not temporarily output, the target data may be stored in the memory unit of the memory circuit 12, so as to ensure accurate storage of the target data by means of refreshing. After the processed target data is transmitted to the first transmission path TR1 or output through the interface circuit 11, the target data stored in the memory unit may be retained or cleared. Each memory circuit 12 may output target data that was not previously output after an output instruction is received or an amount of target data that is stored in the memory circuit 12 and has not been output reaches a first preset threshold, or output target data that was not previously output after a total amount of target data that is stored in all memory circuits 12 and has not been output reaches a second preset threshold.

In some other embodiments, the second transmission path TR2 is configured for unidirectional transmission of initial data. Unidirectional transmission of initial data means that only transmission of the initial data from the memory circuit 12 to the computing unit 13 is allowed, while transmission of the target data from the computing unit 13 to the memory circuit 12 is not allowed. In this way, it is beneficial to simplify timing control and avoid conflicts caused by simultaneous input and output operations on the second transmission path due to an instruction error, and retain a possibility of temporarily inputting the initial data to be processed through the first transmission path and the second transmission path due to congestion on the third transmission path.

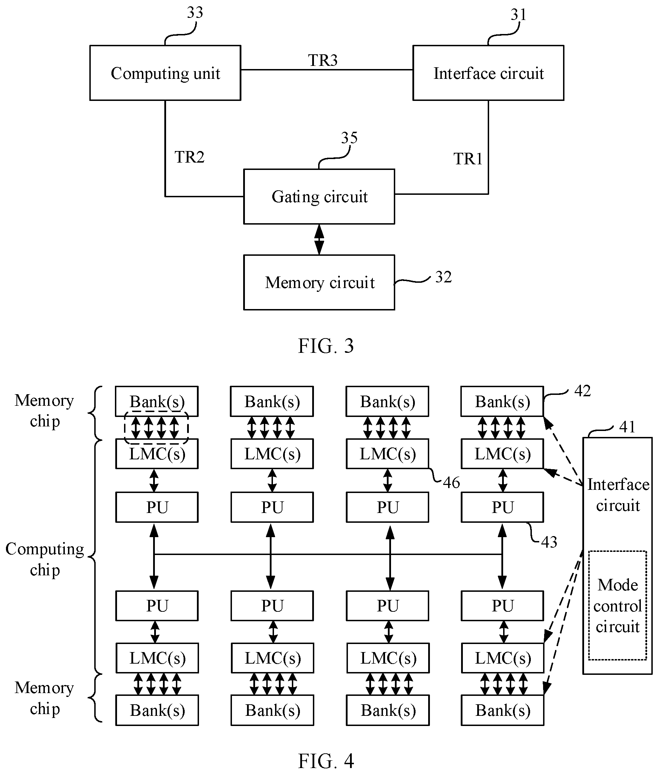

In some embodiments, referring to FIG. 3, an in-memory processing chip further includes a gating circuit 35, and a memory circuit 32 is connected to a first transmission path TR1 or a second transmission path TR2 through the gating circuit 35. That is, the gating circuit 35 includes a function of a multiplexer. At the same moment, only one of a computing unit 33 and an interface circuit 31 can be connected to the memory circuit 32. In this way, it is beneficial to control a flow direction of data transmission, a data storage operation of the initial data and the model data is separated from a data calculation operation of the initial data, thereby avoiding a conflict between the data storage operation and the data calculation operation that occur in parallel.

In some embodiments, the gating circuit 35 is further configured to record refresh information of a corresponding memory circuit 32, and is configured to send the recorded refresh information to the interface circuit 31 before the interface circuit 31 is disconnected from the memory circuit 32 or after the interface circuit 31 is reconnected to the memory circuit 32. The refresh information includes a current refresh row of a normal refresh operation (that is, sequential refresh). The current refresh row may be obtained according to a count value of a refresh counter. The refresh information may further include row hammer address information. The row hammer address information may include an address of an attacked row or a victim row that has reached a row hammer refresh threshold, and includes an address of an attacked row that has not reached the row hammer refresh threshold but is performing address accumulation. If the interface circuit 31 has a memory management function, the interface circuit 31 may control internal refresh of the memory circuit 32 according to the received refresh information. If the interface circuit 31 has no memory management function, an external circuit (such as a CPU) connected to the interface circuit 31 may control internal refresh of the memory circuit 32.

The gating circuit 35 may record refresh information of the corresponding memory circuit 32 through an independent built-in counter, or may directly obtain information about the refresh counter in the memory circuit 32 to implement recording of the refresh information.

It should be noted that if the gating circuit 35 sends the refresh information before the interface circuit 31 is disconnected from the memory circuit 32, the interface circuit 31 or the external circuit may control a connection occasion between the memory circuit 32 and the interface circuit 31 according to whether the refresh information and the target data are output through the interface circuit 31, so as to ensure timely refresh inside the memory circuit 32. If the in-memory processing chip includes multiple memory circuits 32, because each memory circuit 32 has a corresponding gating circuit 35 (gating circuits 35 corresponding to different memory circuits 32 are different), the interface circuit 31 or the external circuit receives refresh information of the multiple memory circuits 32, and then controls a connection sequence between the interface circuit 31 and different memory circuits 32 according to the refresh information of different memory circuits 32, so as to refresh different memory circuits 32 in sequence.

In some embodiments, referring to FIG. 4, the in-memory processing chip further includes a memory controller 46 (LMC(s), local memory controller(s)), which is disposed between a corresponding memory circuit 42 and a corresponding gating circuit (not shown), or is disposed between a corresponding gating circuit and the computing unit 43, and the memory controller 46 is at least configured to read data in the memory circuit 42. It may be understood that regardless of a specific position of the memory controller 46, the memory controller 46 is configured to control the memory circuit 42 during some time periods.

An interface between the memory controller 46 and the memory circuit 42 mainly includes a data bus, an address/instruction bus, and a test mode bus. Basic functions and corresponding content that the memory controller 46 needs to have include: an instruction translation module configured to receive an instruction transmitted by the computing unit 43 or an interface circuit 41, convert the instruction into an instruction that can be recognized by the memory circuit 42 in a private protocol, and perform instruction scheduling according to a timing requirement of a private interface; a data processing module configured to perform ECC error detection and correction, convert data asynchronously and synchronously, buffer data, receive and send data, and the like; and a memory management module configured to perform refresh control on the memory circuit, perform mode control on the memory circuit, perform redundancy control and repair of hybrid bonding or through silicon vias, perform test mode control on the memory circuit, and the like.

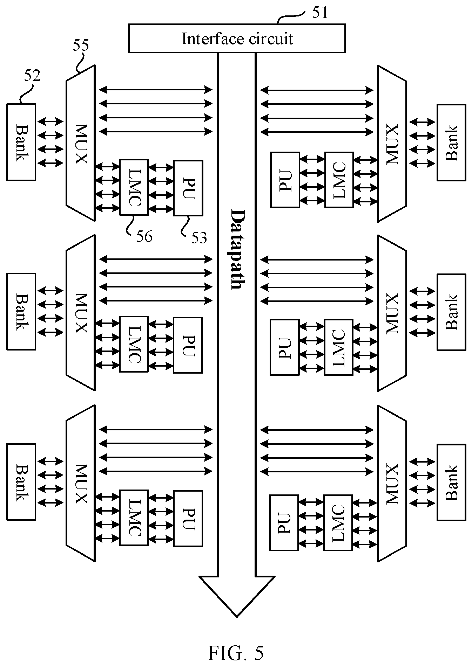

Specifically, referring to FIG. 5, when the memory controller 56 is disposed between a gating circuit 55 and a computing unit 53, an interface circuit 51 is connected to a memory circuit 52 through the gating circuit 55, and the memory controller 56 is on a second transmission path. In this case, if the gating circuit 55 is connected to a first transmission path and is disconnected from the second transmission path, the memory controller 56 cannot control the memory circuit 52. In this way, the interface circuit 51 needs to play a partial role in controlling the memory circuit, that is, the interface circuit 51 and the memory controller 56 have an overlapping function. The overlapping function includes memory circuit instruction decoding, data processing, memory processing, and the like.

In some embodiments, when the memory controller 56 is disposed between the gating circuit 55 and the computing unit 53, the gating circuit is further configured to send refresh information of the memory circuit 52 to the memory controller 56 through the second transmission path, so that the memory management module in the memory controller 56 performs refresh control on the memory circuit 52 based on the refresh information.

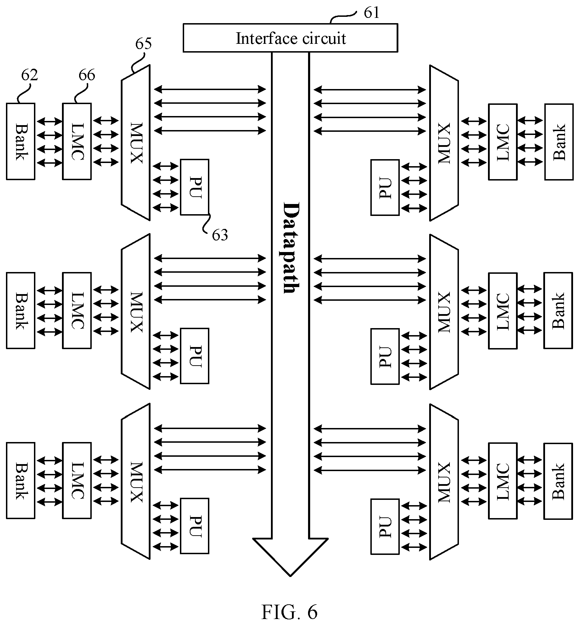

Referring to FIG. 6, when a memory controller 66 is disposed between a gating circuit 65 and a memory circuit 62, the memory controller 66 maintains a connection to the memory circuit 62 regardless of whether the memory circuit 62 is connected to the first transmission path or the second transmission path. In this way, a function of the interface circuit 61 may not overlap with a function of the memory controller 66. In this scenario, a main function of the interface circuit 61 includes instruction decoding and translation, a data processing function, and connection to the memory controller 66 through an on-chip bus standard (such as AXI, Advanced extensible Interface).

In addition, no matter in FIG. 5 or FIG. 6, different memory circuits are connected to the interface circuit through a primary data path datapath, and the interface circuit may be connected to at least one memory circuit at the same moment. When a connection manner shown in FIG. 5 is adopted, the interface circuit may adopt a DRAM interface of a JEDEC standard. When a connection manner shown in FIG. 6 is adopted, the interface circuit may adopt the DRAM interface of the JEDEC standard or adopt other universal buses. Other universal bus standards include CXL (Compute Express Link) and UCIE (Universal Chiplet Interconnect Express, universal chiplet interconnect express). Except that a connection protocol between an interface circuit and an external circuit adopts a public standard, data transmission protocols between different circuits in the in-memory processing chip may all adopt private protocols, for example, between an interface circuit and a memory controller, between an interface circuit and a memory circuit, between an interface circuit and a computing unit, and between a computing unit and a memory controller.

It should be noted that in the embodiment shown in FIG. 4, the memory circuit 42 is marked as Bank(s), the memory controller 46 is marked as LMC(s), and the computing unit 43 is marked as PU, which represents that the memory circuit 42 is in a one-to-one correspondence with the memory controller 46, and each computing unit 43 corresponds to at least one memory circuit 42 and at least one memory controller 46. In the embodiments shown in FIG. 5 and FIG. 6, the memory circuit is marked as a Bank, the memory controller is marked as an LMC, and the computing unit is marked as a PU, which represents that each computing unit corresponds to one memory circuit and one memory controller. Different memory circuits are disposed in parallel, and the memory circuit is in a one-to-one correspondence with the gating circuit. It may be understood that, larger quantities of memory circuits 42 and memory controllers 46 that correspond to each computing unit 43 indicate a greater maximum bandwidth of each computing unit 43 and a larger area occupied by each computing unit 43. Furthermore, a quantity of computing units 43 determines a maximum internal bandwidth of an entire in-memory processing chip.

In addition, in FIG. 4, two dashed lines are adopted to respectively connect to the memory circuit 42 and the memory controller 46 to represent the two embodiments shown in FIG. 5 and FIG. 6. That is, the interface circuit 41 may be connected to the memory circuit 42 through the gating circuit but not to the memory controller 46, or may be connected to the memory circuit 42 through the gating circuit and the memory controller 46 in sequence.

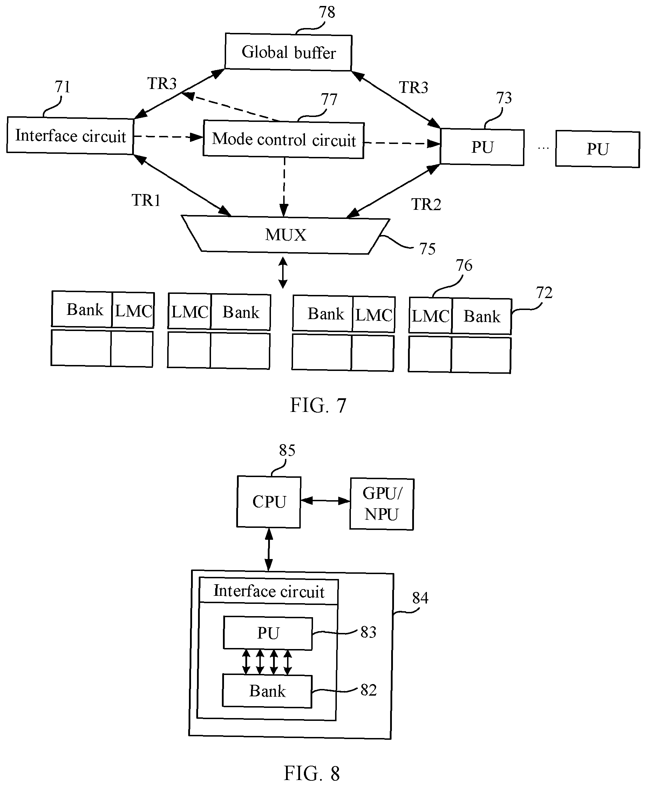

In some embodiments, referring to FIG. 7, an in-memory processing chip further includes a mode control circuit 77. The mode control circuit 77 is configured to control a memory circuit 72 to be connected to a first transmission path TR1, or control a memory circuit 72 to be connected to a second transmission path TR2. In other words, the mode control circuit 77 implements transmission path switching by controlling a gating circuit 75. In FIG. 7, a solid line represents a data flow, a dashed line represents a control flow, and that a memory controller 76 is located between the gating circuit 75 and the memory circuit 72 is taken as an example. In this scenario, some core functions of the interface circuit are to translate an instruction of an external standard interface into an instruction that can be recognized by the memory controller 76 and the mode control circuit 77.

In FIG. 7, by providing the mode control circuit 77, the in-memory processing chip can have two completely independent working modes, and the two working modes do not interfere with each other. When the memory circuit 72 is connected to the first transmission path TR1 and disconnected from the second transmission path TR2, a function of the in-memory processing chip is a normal memory chip. In this case, the in-memory processing chip may serve as a normal memory chip or write model data in this scenario. When the memory circuit 72 is disconnected from the first transmission path TR1 and connected to the second transmission path TR2, the function of the in-memory processing chip includes at least a calculation function. After recognizing the instruction, the mode control circuit 77 may send a control instruction to a computing unit 73. A control signal may be adopted to control a timing of computing processing performed by the computing unit 73, control the computing unit 73 to be adjusted from a sleep mode to a working mode, and the like.

In some embodiments, in the embodiment shown in FIG. 5, the overlapping function between the interface circuit 51 and the memory controller 56 may further include control instruction decoding. The interface circuit 51 is configured to receive an externally input instruction and decode the instruction. The memory controller 56 is configured to receive a control instruction output by the mode control circuit and decode the control instruction. A decoding result may at least represent whether the gating circuit is disconnected from the first transmission path and in communication with the second transmission path. The memory controller 76 may further have a sleep state and an enabled state. When the gating circuit is in communication with the first transmission circuit and the memory controller does not need to transmit data, the memory controller is in the sleep state. When the gating circuit is in communication with the second transmission circuit, the memory controller is in the enabled state.

It may be learned from the foregoing description that when the memory circuit 72 is disconnected from the first transmission path TR1 and is connected to the second transmission path TR2, the computing unit 73 may receive initial data through the second transmission path TR2, or may receive initial data pre-stored in the memory circuit 72 through the second transmission path. After the computing unit 73 completes computing processing, target data may be output through a third transmission path TR3, or may be stored in the memory circuit 72 through the second transmission path TR2. The target data stored in the memory circuit 72 may be output or not output after the gating circuit 75 (MUX) is connected to the first transmission path TR1. The target data stored in the memory circuit 72 may be cleared or not cleared after being transmitted through the first transmission path TR1. It may be understood that the computing unit 73 may store the target data in the memory circuit 72 through the second transmission path TR2 and output the target data through the third transmission path TR3 and the interface circuit 71 at the same time.

In some embodiments, the mode control circuit 77 is further configured to control the third transmission path TR3 to be connected or disconnected. For example, when the gating circuit 75 is connected to the first transmission path TR1, the third transmission path TR3 is controlled to be disconnected, so that the computing unit 73 is not connected to the interface circuit 71 or the memory circuit 72; and when the gating circuit 75 is connected to the second transmission path TR2, the third transmission path TR3 is controlled to be connected, so that the computing unit 73 can receive initial data and output target data through the third transmission path TR3.

In some embodiments, a global buffer 78 is further provided on the third transmission path TR3 to receive initial data and output target data, and can perform timing adjustment on the initial data and the target data to wait for the computing unit to complete a computing processing operation or wait for the interface circuit to complete a data output operation.

In some embodiments, referring to FIG. 2, a mode control circuit 27 is located in a region in which the interface circuit 21 is located. In addition, in some embodiments, the in-memory processing chip includes a memory chip and a computing chip, the memory circuit 22 is located on the memory chip, and the interface circuit 21 and the computing unit 23 are located on the computing chip.

FIG. 8 is a schematic diagram of a structure of a computing system according to an embodiment of this application. The computing system includes at least an external processor and an in-memory processing chip in any of the foregoing embodiments. Referring to FIG. 8, in some embodiments, a total bandwidth between a memory circuit 82 and a computing unit 83 in the in-memory processing chip is greater than a bandwidth between the in-memory processing chip 84 and the external processor. The external processor includes a central processing unit 85 (CPU). It should be noted that, in a case that computing power of the in-memory processing chip 84 is relatively low, the in-memory processing chip 84 may further perform collaborative computing with an external graphics processing unit (Graphics Processing Unit, GPU) and/or a neural processing unit (Neural Processing Unit, NPU); and in a case that computing power of the in-memory processing chip 84 is relatively high, the in-memory processing chip 84 may independently complete artificial intelligence computing.

It should be noted that "connection" described in this application means that data transmission or signal communication can be performed.

A person of ordinary skill in the art may understand that the foregoing implementations are specific embodiments for implementing this application. In actual application, various modifications may be made to the forms and details of the implementations without departing from the scope of this application. Any person skilled in the art may make changes and modifications without departing from the scope of this application. Therefore, the protection scope of this application shall be subject to the scope defined by the claims.

## Claims

1. An in-memory processing chip, comprising an interface circuit, a memory circuit, and a computing unit;
a first transmission path existing between the interface circuit and the memory circuit;
a second transmission path existing between the memory circuit and the computing unit; and
a third transmission path existing between the interface circuit and the computing unit, and the third transmission path and the first transmission path being independent of each other.

2. The in-memory processing chip according to claim 1, comprising a plurality of memory circuits and a plurality of computing units, each of the computing units corresponding to at least one memory circuit, different memory circuits each having a corresponding first transmission path and a corresponding second transmission path, and different memory circuits each being connected to the interface circuit through the corresponding first transmission path.

3. The in-memory processing chip according to claim 1 or 2, wherein the first transmission path is at least configured to transmit model data, the second transmission path is at least configured to transmit model data, the third transmission path is at least configured to transmit initial data and target data, and the computing unit performs computing processing on the initial data based on the model data to obtain the target data.

4. The in-memory processing chip according to claim 3, wherein the first transmission path is further configured to transmit the initial data and the target data, and the second transmission path is further configured to transmit the initial data and the target data.

5. The in-memory processing chip according to claim 4, wherein bandwidths of the first transmission path and the second transmission path are each greater than a bandwidth of the third transmission path, and a priority of the third transmission path in transmitting the initial data and the target data is higher than priorities of the first transmission path and the second transmission path.

6. The in-memory processing chip according to claim 1 or 2, further comprising a gating circuit, the memory circuit being connected to the first transmission path or the second transmission path through the gating circuit.

7. The in-memory processing chip according to claim 6, wherein the gating circuit is further configured to record refresh information of a corresponding memory circuit, and is configured to send the recorded refresh information to the interface circuit before the interface circuit is disconnected from the memory circuit or after the interface circuit is reconnected to the memory circuit.

8. The in-memory processing chip according to claim 6, further comprising a memory controller disposed between a corresponding memory circuit and a corresponding gating circuit, or disposed between a corresponding gating circuit and the computing unit, and the memory controller being at least configured to read data in the memory circuit.

9. The in-memory processing chip according to claim 6, further comprising a mode control circuit configured to control the memory circuit to be connected to the first transmission path, or control the memory circuit to be connected to the second transmission path.

10. The in-memory processing chip according to claim 9, wherein the mode control circuit is further configured to connect or disconnect the third transmission path.

11. The in-memory processing chip according to claim 9, wherein the mode control circuit is in a region in which the interface circuit is located.

12. The in-memory processing chip according to claim 1, wherein a total bandwidth between the memory circuit and the computing unit in the in-memory processing chip is greater than a bandwidth between the in-memory processing chip and an external processor.
